Europäisches Patentamt

**European Patent Office**

Office européen des brevets

(11) Publication number: **0 093 555**
A1

## (12) EUROPEAN PATENT APPLICATION

(21) Application number: **83302295.7**

(22) Date of filing: **22.04.83**

(51) Int. Cl.³: **H 02 P 7/28**
**H 02 P 3/08, B 60 L 15/28**

(30) Priority: **30.04.82 US 373467**
**30.04.82 US 373468**

(43) Date of publication of application:
**09.11.83 Bulletin 83/45**

(84) Designated Contracting States:
**DE FR GB IT**

(71) Applicant: WESTINGHOUSE ELECTRIC CORPORATION
Westinghouse Building Gateway Center
Pittsburgh Pennsylvania 15235(US)

(72) Inventor: Franz, James Henry, Jr.
285 Picture Drive
Pittsburgh Pennsylvania(US)

(74) Representative: van Berlyn, Ronald Gilbert
23, Centre Heights
London, NW3 6JG(GB)

(54) Vehicle propulsion motor control apparatus.

(57) A DC series motor control apparatus is operative with a voltage source and includes at least first and second thyristor switch devices to provide respectively power and brake operation of said motor as selected by a conduction control circuit; a commutation circuit is connected to each of the thyristor switch devices when desired to terminate the conduction of each thyristor switch device that is made conducting by the conduction control circuit.

FIG. 8

1

VEHICLE PROPULSION MOTOR CONTROL APPARATUS

It is known in the prior art to control the speed of a vehicle propulsion direct current series motor by a chopper apparatus including a thyristor switch device in series with the motor, as shown for example in U.S. Patents 3,769,566 and 4,284,930. Speed control of the motor is provided by varying the width of voltage pulses supplied to the motor such that the resulting average power supplied to the motor establishes the operational speed thereof. A commutation circuit including a charge capacitor has been used to provide a biased voltage across a conducting thyristor device for commutating the conduction of that thyristor device. A propulsion motor is operative in a motoring mode when the passenger vehicle is being propelled or accelerated along a track and in a brake mode when the vehicle is being stopped or decelerated.

As described in a published article in the "Westinghouse Engineer" for March, 1973 at pp. 34-41, the average voltage applied to the motor armature is controlled by adjusting the ratio of chopper OFF time to the chopper ON time with the resulting average motor armature current determining the motor torque for moving the vehicle along the track.

In the motoring or power mode of operation the motors of a vehicle are connected in relation to a direct current voltage source such that the armature current is supplied through a chopper when the chopper is ON and through the motors to ground. When the chopper is turned OFF, the energy stored in the motor reactor and the inductance of the motor field maintains current flow in the motor circuit through a freewheeling diode. With the chopper ON the motor current increases and with the chopper OFF the current is forced into the power supply through the freewheeling diode by the motor reactor.

In the present invention, the armature of at least one series DC vehicle propulsion motor is energized by a chopper to regulate the current of that motor. The armature is connected in a bridge circuit with thyristor switch devices to selectively provide each of forward and reverse operations for each of power and brake operations of the motor, with selective operation of thyristor commutation apparatus for all of the thyristor switch devices to enable the required motor current switching characteristics to be provided between these respective operations.

The invention in its broad form comprises control apparatus for a motor which includes an armature and is connected to a voltage source for controlling and selecting a power mode of operation and a brake mode of operation of the motor, the apparatus comprising: first thyristor switch means connected to allow current flow in a first direction through said armature, second thyristor switch means connected to allow current flow in a second direction through said armature, commutation control means coupled with each of the first and second thyristor switch means for selectively terminating the conductivity of said thyristor switch means, and conduction control means coupled with each of the first and second thyristor switch means and coupled with said commutation control means for selecting one of a power mode or a brake mode of operation by initiating the conductivity of a predetermined one of the first and second thyristor switch means with said conduction control means in relation to the termination of the conductivity of the other of said thyristor switch means with said commutation control means.

A more detailed understanding of the invention can be had from the following description of a preferred embodiment to be read and understood in conjunction with the accompanying drawing wherein:

Figure 1 shows a prior art DC motor control apparatus as described in U.S. Patent No. 4,284,930;

Figure 2 shows a prior art trolley coach propulsion motor control apparatus;

Figure 2A shows a prior art bridge circuit arrangement for a DC series motor;

Figure 3 shows the motor control apparatus in accordance with an embodiment of the present invention and with a motor current illustration for the forward power operation of the motor;

Figure 4 shows the present motor control apparatus with a motor current illustration for the reverse power operation of the motor;

Figure 5 shows the present motor control apparatus with a motor current illustration for the forward brake operation of the motor;

Figure 6 shows the present motor control apparatus with a motor current illustration for the reverse brake operation of the motor; and

Figure 7 is an operational chart illustrating the controlled operation of the selected thyristor switch devices to provide the desired operation of the motor circuit as here described.

Figure 8 shows a bridge control circuit arrangement for a DC motor in accordance with an embodiment of the present invention;

Figure 9 shows a modification of the bridge circuit arrangement for a DC series motor in accordance with an embodiment of the present invention;

Figure 10 shows the commutation control signal and thyristor switch conduction relationships used the present invention; and

Figure 11 shows the motor current characteristics for the motor operation provided in accordance with the prior art motor control apparatus; and

Figure 12 shows the motor current characteristics for the motor operation provided in accordance with the present motor control apparatus.

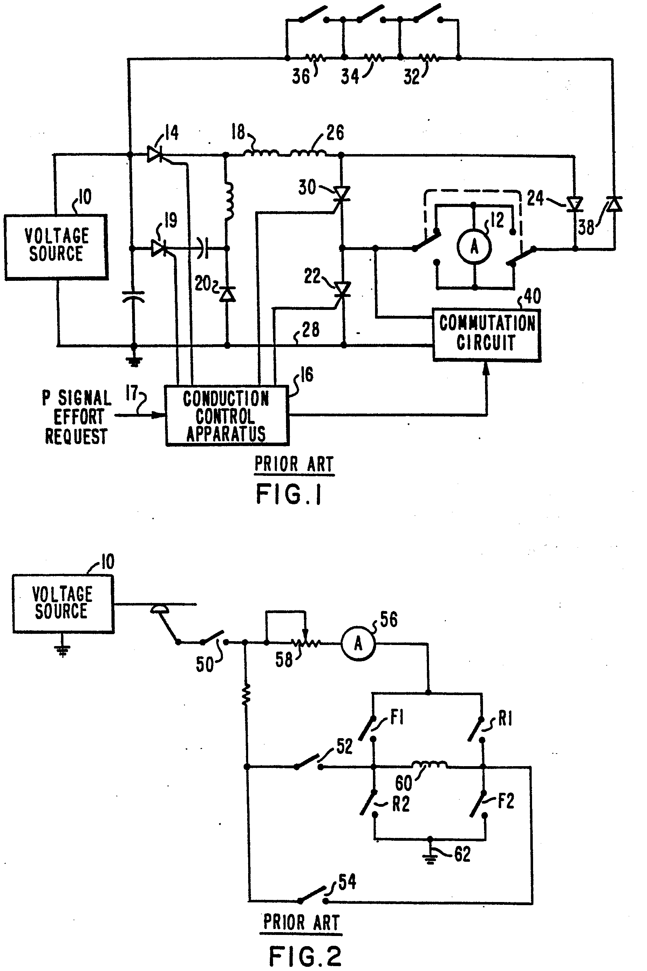

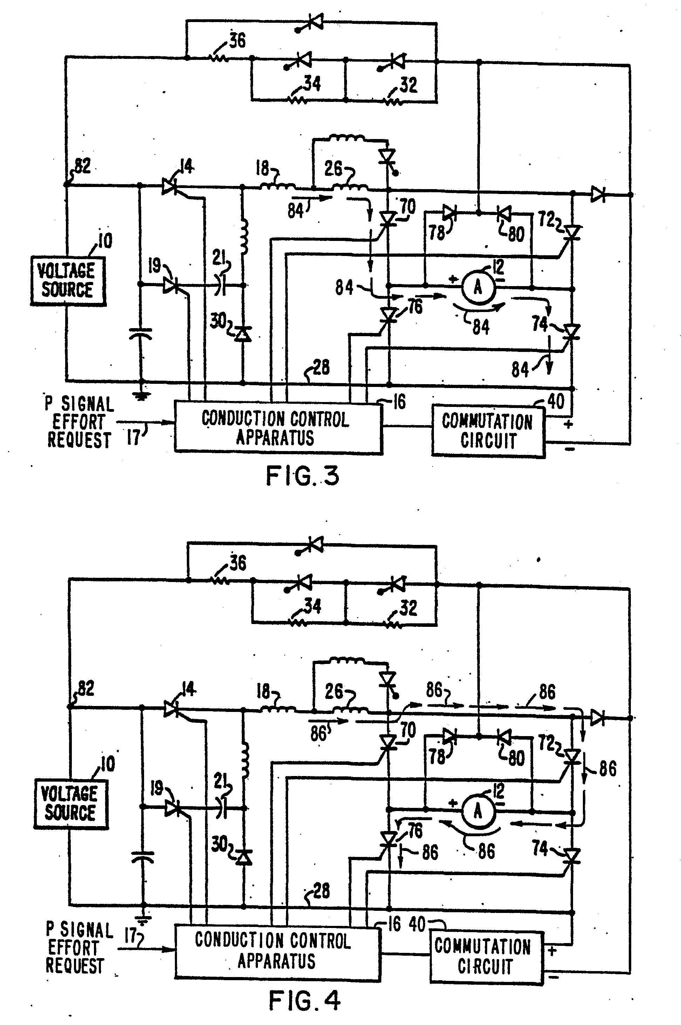

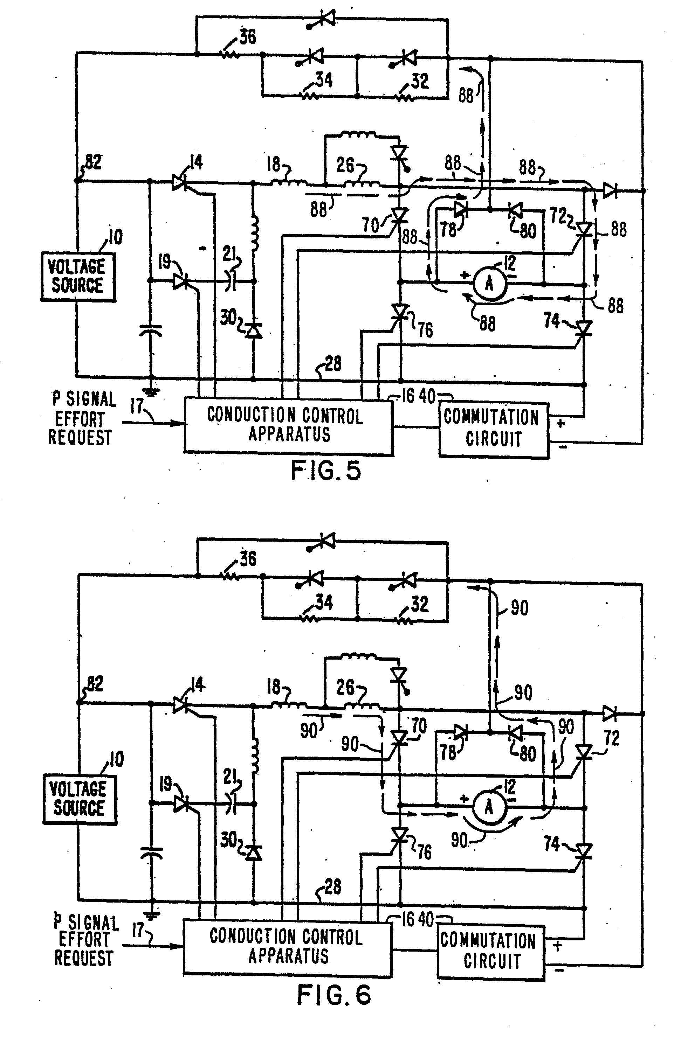

In Figure 1 there is shown a prior art direct current motor control apparatus as described in U.S. Patent No. 4,284,930, including a motor armature current reversing circuit arrangement, and operative for determining the average current supplied from a direct current voltage source 10 to a direct current motor armature load 12, and including a series main thyristor switch device 14 that repetitively operates in an ON condition and an OFF condition to chop and regulate the voltage applied to the motor armature load 12. The control of this voltage is determined by changing the ON operation time in relation to the OFF operation time of the conduction by the main thyristor 14 for controlling the speed of the motor 12. To reduce the speed of the motor armature 12 the armature voltage is decreased and to increase the motor armature speed the armature voltage is increased. The voltage source 10 for a typical traction motor application can be a relatively constant direct current voltage source, such as 600 volts from a central power station. As is well known to persons skilled in this art, the main thyristor switch 14 is gated by a conventional conduction control apparatus 16 in response to a P signal effort request input 17 to turn ON and become conductive and is subsequently commutated by the commutation thyristor 19 in conjunction with capacitor 21 to turn OFF and become non-conductive as required to provide a desired average voltage across the motor armature 12 to determine the motor speed. Each time the main thyristor switch 14 conducts, the voltage across the motor armature 12 and the motor reactor 18 rises to the voltage of the voltage source 10. Each time the main thyristor 14 blocks, the voltage across the motor armature 12 and the motor reactor 18 falls to zero, such that the motor 12 responds to the average motor voltage. If the main thyristor switch 14 remains conductive for a longer time period, this raises the average motor voltage and if the main thyristor switch 14 remains blocked for a longer time period, this lowers the average motor voltage. The motor current increases each time the thyristor switch 14 becomes conductive and then decreases each time the main thyristor switch 14 blocks. The average motor current is proportional to the torque of the motor 12. The freewheeling diode 20 allows the motor current to continue due to the inductance of the motor circuit after the main thyristor switch 14 blocks and becomes non-conductive.

A power thyristor switch 22 is made conductive when it is desired for the motor circuit to operate in the power mode for the propulsion of the vehicle coupled to the motor armature 12. A power diode 24 and a motor field winding 26 are connected in the power mode circuit including the power thyristor switch 22, the return conductor 28, the voltage source 10 and the main thyristor switch 14. A brake thyristor switch 30 is made conductive when it is desired for the motor circuit to become operative in the brake mode. When dynamic braking operation is desired, one or more of the braking resistors 32, 34 and 36 are included in the brake circuit including the brake diode 38. A well-known commutation circuit 40 is operative to terminate the conduction of the power thyristor switch 22 when it is desired for the motor circuit to operate in the brake mode with the brake current flowing through the motor armature 12. A change in the operation of the motor armature 12 between forward and reverse as may be desired in each of the power mode and the brake mode is provided by the well-known mechanical reverser switch arrangement 42, with each of the switches 44 and 46 being changed to the other positions for this purpose.

The brake mode with the main thyristor switch 14 not conducting provides current flow through a circuit including the voltage source 10, the freewheeling diode 20, the motor reactor 18, the motor field 26, the brake thyristor 30, the motor armature 12 and any of the resistors 32, 34 and 36 that are not short circuited and through the brake diode 38 to regenerate power into the voltage source 10.

In reference to the motor control circuit shown in Figure 1, when the desired vehicle operation requires changing from the power mode with the power thyristor 22 conducting to the brake mode with the brake thyristor 30 conducting, the brake thyristor 30 can be made conducting before the power thyristor 22 is made non-conducting such that both the power thyristor 22 and the brake thyristor 30 are conducting at the same time to establish a desired current path from the voltage source 10 and through the conduction control main thyristor 14, the motor reactor 18, the field winding 26, the brake thyristor 30, the power thyristor 22 and the ground return conductor 28 back to the voltage source 10 to provide a predetermined and controlled current path through the motor reactor 18 and the motor field 26.

To provide the desired control of the motor for particularly low vehicle operating speeds, a forced commutation circuit 40 is provided for the power thyristor 22. When both the brake thyristor 30 and the power thyristor 22 are made conducting during the transition from power mode to brake mode of operation, the commutation circuit 40 is operated when desired to stop the conduction of the power thyristor 22. The resulting current flow through the inductance of the motor reactor 18 and the field winding 26 will now continue to flow as brake current through the motor armature 12 to provide in effect a very rapid changeover from the power mode to the brake mode of operation. Because of the provision of the commutation circuit 40, brake mode operation is available down to very low vehicle speeds with assured brake current build-up at much lower speeds and lower motor circuit currents than could be provided with previous control apparatus. In addition, the main thyristor 14 can determine the desired magnitude of this current in field 26 before the power thyristor 22 is commutated to establish at least the initial brake effort provided by the motor 12.

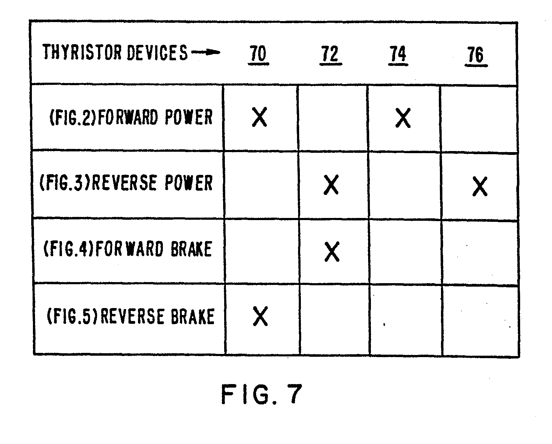

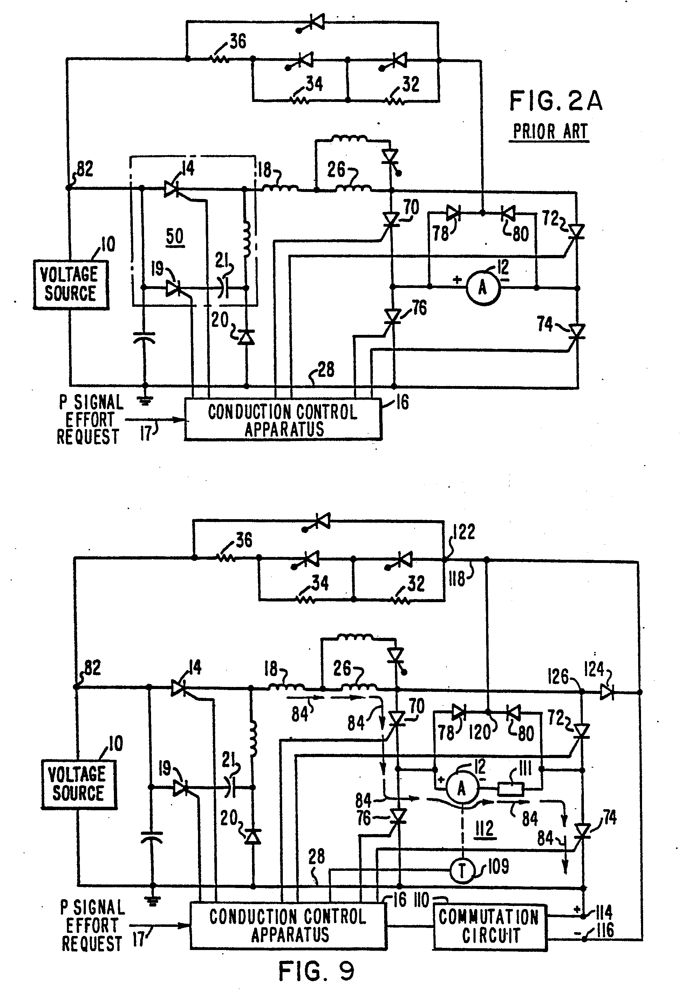

In Figure 2 there is shown a prior art trolley coach motor control apparatus including contactor switches to provide forward and reverse operation of a propulsion motor. With the line switch 50 closed and the brake contacts 52 and 54 open the motor armature 56 for power operation is energized through an operator-adjustable speed control resistor 58 and the field winding 60 in one of a forward power direction through closed contacts F1 and F2 or a reverse power direction through closed contacts R1 and R2 to the ground connection 62. For brake operation the line switch 50 is open and one of the contacts 52 is closed for forward brake operation or the contact 54 is closed for reverse brake operation.

In Figure 2A there is shown a prior art motor control bridge circuit apparatus, as disclosed in the above-referenced patent application, for a DC motor that provides forward and reverse operation of the motor. The chopper portion 50 of the control apparatus includes the main thyristor switch device 14 operative with the voltage source 10. A forced commutation thyristor 19 and a commutation capacitor 21 are operative to terminate the conduction of the main thyristor 14. The chopper regulates the voltage applied to the motor circuit including armature 12, the motor reactor 18 and the motor field 26. The motor control circuit includes the control thyristor 70, the control thyristor 72, the forward power thyristor 74 and the reverse power thyristor 76 connected in a bridge arrangement with the motor armature 12. A forward brake diode 78 and a reverse brake diode 80 are connected from respective sides of the armature 12, through the brake resistors 32, 34 and 36 to the connection 82 with the voltage source 10 and the main thyristor 14. A conventional and well known conduction control apparatus 16 is provided to fire the respective thyristor switches as required to provide the desired operation of the motor control apparatus. Forward power operation of the motor armature 12 is provided with the forward control thyristor 70 and the forward power thyristor 74 made conducting by the conduction control apparatus 16. Reverse power operation of the motor armature 12 is provided with the reverse control thyristor 72 and the reverse power thyristor 76 made conducting by the conduction control apparatus 16. Forward brake operation of the motor armature 12 is provided with the control thyristor 72 made conducting by the conduction control apparatus 16 and the forward brake diode 78 conducting this current through the brake resistors 32, 34 and 36 to the circuit connection 82. Reverse brake operation of the motor armature 12 is provided with the control thyristor 70 made conducting by the conduction control apparatus 16 and the reverse brake diode 80 conducting this current through the brake resistors 32, 34 and 36 to the circuit connection 82.

In brake operation, regeneration of current to the voltage source 10 is provided when the main thyristor 14 turns OFF. For example, in the forward brake mode with dynamic braking and the main thyristor 14 turned ON, the brake current conducts from the armature 12, through the diode 78 and the brake resistors 32, 34 and 36, through the main thyristor 14, the motor reactor 18, the motor field 26 and the control thyristor 72. With the main thyristor 14 turned OFF, the brake current conducts from the motor armature 12 through the diode 78 and the brake resistors 32, 34 and 36 through the voltage source 10, the freewheeling diode 20, the motor reactor 18, the motor field 26, and the control thyristor 72. The diodes 78 and 80 prevent current from the voltage source 10 feeding back into the brake motor circuit. The reverse brake mode is operative with the control thyristor 70 conducting in conjunction with the diode 80.

In Figure 3 there is shown one operation of the motor control apparatus in accordance with the present invention. The chopper portion of the control apparatus includes the main thyristor switch device 14 operative with power supply 10 to regulate the current flow through the motor armature 12, the motor reactor 18, the motor field 26, the freewheeling diode 20, the commutation thyristor 19 and the commutation capacitor 21. The motor control circuit includes the forward control thyristor 70, the reverse control thyristor 72, the forward power thyristor 74 and the reverse power thyristor 76 connected in a bridge arrangement with the motor armature 12. A forward brake diode 78 and a reverse brake diode 80 are connected from respective sides of the armature 12 through the brake resistors 32, 34 and 36 to the connection 82 with the power supply 10 and the main thyristor 14. A conventional and well-known conduction control apparatus 16 is provided to fire the respective thyristors as required to provide the desired operation of the motor control apparatus. A conventional and well-known commutation circuit 40 is connected across the bridge arrangement to terminate the conduction of all the thyristors 70, 72, 74 and 76 when desired.

In Figure 3 there is shown by arrow 84 the current flow provided for the forward power operation of the motor armature 12 with the forward control thyristor 70 and the forward power thyristor 74 made conducting by the conduction control apparatus 16.

In Figure 4 there is shown by arrow 86 the current flow provided for reverse power operation of the motor armature 12 with the reverse control thyristor 72 and the reverse power thyristor 76 made conducting by the conduction apparatus 16.

In Figure 5 there is shown by arrow 88 the current flow provided for the forward brake operation of the motor armature 12 with the control thyristor 72 made conducting by the conduction control apparatus 16 and the forward brake diode 78 conducting such that the current flows through the brake resistors 32, 34 and 36 to the circuit connection 82.

In Figure 6 there is shown by arrow 90 the current flow provided for reverse brake operation of the motor armature 12, with the control thyristor 70 made conducting by the conduction control apparatus 16 and the reverse brake diode 80 conducting the current through the brake resistors 32, 34 and 36 to the circuit connection 82.

In Figure 7 there is provided an operational chart to illustrate the desired control operation of the thyristor switches 70, 72, 74 and 76 to be made conductive by the conduction control apparatus 16 to provide the respective motor operations as may be desired. After the commutation circuit 40 is fired to commutate each of the thyristor switches 70, 72, 74 and 76, the conduction control apparatus 16 then selectively fires the thyristor switches as shown in Figure 7 to provide the desired operation of the motor armature 12. Firing of the thyristor switches 70 and 74 provides a forward power operation as shown in Figure 3 for the motor armature 12. Firing of the thyristor switches 72 and 76 provides a reverse power operation as shown in Figure 4 for the motor armature 12. Firing of the thyristor switch 72 provides a forward brake operation as shown in Figure 5 for the motor armature 12. Firing of the thyristor switch 70 provides a reverse brake operation as shown in Figure 6 for the motor armature 12.

The motor circuit arrangement shown in Figures 5 and 6 enables regeneration of motor current to the voltage source 10 during brake operation of the motor armature 12. Thusly, full power and full brake operation of the motor circuit for each of forward and reverse vehicle operation is provided.

In brake operation, regeneration of current to the voltage source 10 is provided when the main thyristor 14 turns OFF. For example, with the main thyristor 14 turned ON the brake current in the forward conduction mode shown in Figure 5 conducts from the armature 12 through the brake resistors 32, 34 and 36, through the main thyristor 14, the motor reactor 18, the motor field 26 and the forward control thyristor 72. With the main thyristor switch 14 turned OFF, the brake current conducts from the motor armature 12 through the brake resistors 32, 34 and 36 through the voltage source 10, the freewheeling diode 20, the motor reactor 18, the motor field 26 and the forward control thyristor 72. The diodes 78 and 80 prevent current from the voltage source 10 feeding back into the brake motor circuit.

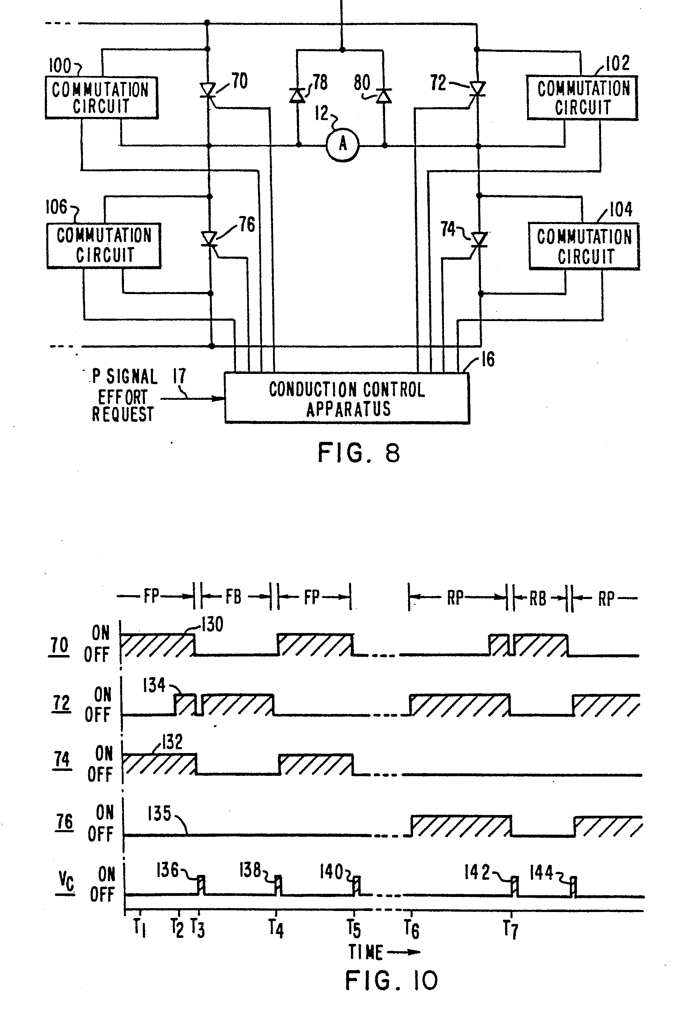

In Figure 8 there is shown the bridge control circuit arrangement for a DC motor having an armature 12 in accordance with the present invention and including a commutation circuit for each of the thyristor switches 70, 72, 74 and 76. A well-known conduction control apparatus 16 provides the gate signals to select the conductive operation of the desired thyristor switches such as the thyristor switches 70 and 74 for the forward power operation, the thyristor switch 72 for the forward brake operation through the diode 78, the thyristor switches 72 and 76 for the reverse power operation and the thyristor switch 70 for reverse brake operation through the diode 80. The commutation circuit 100 is connected across the control thyristor switch 70 for terminating conductivity of the thyristor switch 70 when desired. The commutation circuit 102 is connected across the control thyristor 72 for terminating the conductivity of the thyristor switch 72 when desired. The commutation circuit 104 is connected across the thyristor switch 74 for terminating the conductivity of the forward power thyristor switch 74 when desired. The commutation circuit 106 is connected across the reverse power thyristor switch 76 for terminating the conductivity of the thyristor switch 76 when desired. Each of the commutation circuits 100, 102, 104 and 106 can include a commutation thyristor switch and a charge capacitor, such as the thyristor switch 19 and the capacitor 21 shown in Figure 1.

In Figure 9 there is shown a single commutation circuit 110 connected across the bridge circuit 112 with the positive terminal 114 of the commutation circuit 110 being connected to the ground conductor 28 and the negative terminal 116 of the commutation circuit 110 being connected to the conductor 118 leading from the common connection 120 of the brake diodes 78 and 80 to the connection 122 with the first brake·resistor 32. A current control diode 124 is connected from the connection 126 with the bridge circuit 112 and the negative terminal of the commutation circuit 110 to assure that desired commutation turn OFF of all four thyristor devices 70, 72, 74 and 76 in relation to any stray current flow in the bridge circuit 112 that may be caused by the reactance of armature 12.

In Figure 10 there is shown the operational relationship between the provided thyristor switch conduction gating control signals and the commutation circuit control signals for controlling a DC propulsion motor circuit as shown in Figure 4 in accordance with the present invention. At time T1 the thyristor switches 70 and 74 are shown conducting the current through the motor armature in the forward power mode as regulated by the main thyristor switch 14 and as shown by the curves 130 and 132. At time T2, in preparation for going from the forward power mode to the forward brake mode of operation, the thyristor 72 is gated ON as shown by curve 134, and this is provided to assure a known and desired energization of the motor field 26 in the event the previous current flow through the motor field 26 was too low. The commutation pulse 136 is provided at time T3 for terminating the conduction of all thyristor switches 70, 72, 74 and 76. During the commutation pulse 136, the gating ON of the thyristor switches 70 and 74 terminates, but the gating ON of the thyristor switch 72 continues, such that at the end of the commutation pulse 136, the thyristor switch 72 continues to conduct with the thyristor switches 74 and 76 no longer conducting and the motor operation changes into the forward brake mode of operation. A desired forcing function is determined by the desired current level already flowing in the motor reactor 18 and motor field 26, since if the main chopper 14 had been OFF prior to the changeover to forward brake, there might otherwise have been too little flux in the motor field 26 and a problem could have been presented by the changeover to forward brake operation without the conduction of thyristor 72 for the time period $T_2$ to $T_3$. Since the main chopper 14 is functioning as a motor current source it can be used in this manner to control the current of motor field 26 up to a predetermined level before the turn OFF of the forward power thyristor 74 to force the current flow through the diode 78 and the brake resistor circuit.

When it is desired to return from forward brake mode to forward power mode of operation, and particularly from high speed forward brake mode, it is desired by operation of the conduction control apparatus 16 to gate ON the thyristor switches 70 and 74 at time T4, and provide the commutation pulse 138 to all thyristor switches 70, 72, 74 and 76 from the commutation circuit 110. When the commutation pulse 138 terminates, the thyristor switches 70 and 74 begin conducting as shown by curves 130 and 132. From high speed brake operation without the application of the commutation pulse 138 to all of thyristors 70, 72, 74 and 76, the motor brake current may not die down quickly enough for the desired changeover to the desired power operation. If the forward power control thyristors 70 and 74 are turned ON before the thyristor 72 turns OFF, this can result in an undesired excitation of the field 26 without proper current control resistors.

To assure the desired changeover operation of the motor control circuit shown in Figure 4 from brake to power and from power to brake at all motor speeds and at all practical current levels, the operation of the commutation circuit 110 by the conduction control apparatus 16 in accordance with the present invention is desired, as illustrated in Figure 10.

When it is required to change either way between forward power operation and reverse power operation, for the comfort and safety of the passengers, it is desired that a tachometer 109 be coupled with the motor armature 12 for sensing when the motor speed is substantially zero and a current sensor 111 be provided in the circuit of the motor armature 12 to sense when the armature current is substantially zero before the conduction control apparatus 16 provides such a changeover between forward power operation and reverse power operation. For this purpose, a commutation pulse 140 can be applied at time T5 to all of the thyristors 70, 72, 74 and 76 to remove the current from the armature 12.

If reverse power operation is desired, at time T6 gating pulses turn ON the thyristor switches 72 and 76 as shown by curves 134 and 135. At time T7, in preparation for going from the reverse power mode to the reverse brake mode, the thyristor 70 is gated ON as shown by curve 130. This provides energization of the motor field 26 regardless of the previous current flow through the motor field 26.

The commutation pulse 142 is provided at time T7 for terminating the conduction of all thyristor switches 70, 72 and 76. During the provision of the commutation pulse 142, the gating ON of the thyristor switches 72 and 76 terminates but the gating ON of the thyristor switch 70 continues such that at the end of the pulse 142 the thyristor switch 70 continues to conduct. The motor operation changes into the reverse brake mode. When it is desired to return from the reverse brake mode to the reverse power mode, particularly from high speed reverse brake operation, the thyristor switches 72 and 76 are gated ON and the commutation pulse 144 is provided to all thyristor switches from the circuit 110. When the pulse 144 ends, the thyristor switches 72 and 76 begin conducting as shown by the curves 134 and 135 in the reverse power mode. The vehicle motor control operation then can continue in accordance with this general illustration to establish the desired direction of vehicle movement and the desired speed of that movement.

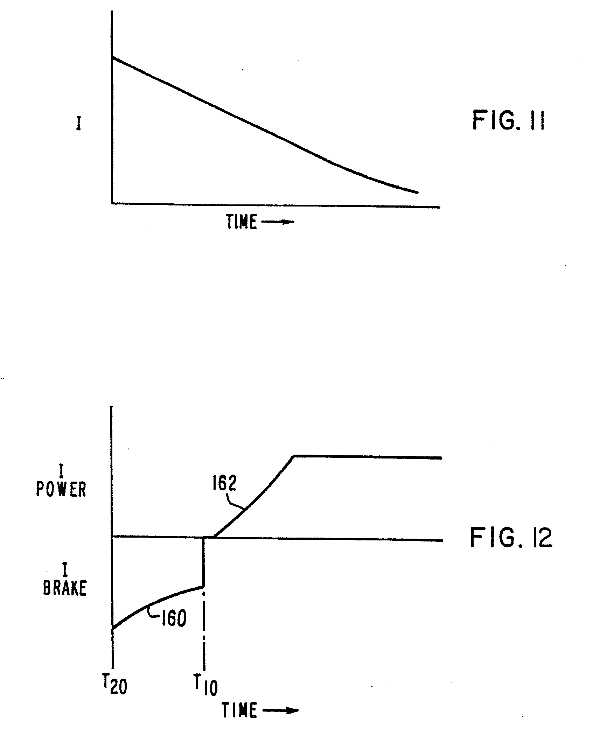

In Figure 11 there is shown the armature current versus time characteristic for the prior art motor circuit shown in Figure 1 and Figure 2A for particular low speed power and high speed brake operations. In lower speed power, as shown in Figure 1, with the main thyristor 14 turned OFF, the freewheeling diode 20, the motor reactor 18, the motor field 26 and the motor armature 12 are in a series circuit with not a substantial voltage drop across the motor armature 12. This causes the motor current to decrease very slowly after the thyristor switch 14 is turned OFF and as shown in Figure 11 at low speed operation and in the power mode. The brake thyristor switch 30 as shown in Figure 1 has to see a zero current condition before it will turn OFF without a commutation operation such as provided for the power thyristor switch 22 by the commutation circuit 40. Therefore, an undesired long period of time is required for the motor armature current to go to zero, for the Figure 1 circuit configuration, and thereby turn OFF the thyristor switch 30.

In brake operation the brake resistors 32, 34 and 36 as shown in Figure 1 may or may not be in the circuit. With the main thyristor 14 in the OFF condition, the brake current of the armature 12 is freewheeling into the voltage source 10. At high speed brake operation with the main thyristor 14 in the OFF condition, each of the output voltage of the voltage source 10, the voltage drop across the brake resistors, the motor armature back EMF and the motor reactor voltage drop all determine how long the armature brake current continues to flow and how rapidly this current continues. When the output voltage of the voltage source 10 gets very low and even close to the back EMF voltage of the armature 12, which happens frequently in actual operation for the well-known third rail power supply operative with transit vehicles, this can result in substantially reduced voltage drops in the motor armature circuit and such a reduced voltage drop condition requires a substantially longer time delay to bring the armature brake current to zero.

The provision of commutation circuits for each of the thyristor switches as shown in Figures 8 and 9 provides an improved control of the motor operation in particularly high speed brake and low speed power conditions of operation. All of the thyristor switches provided to select the power and brake operation of the propulsion motor for both forward and reverse direction of operation are commutated at the same time and then the desired subsequent conduction of one or more of these switches is provided, such as shown in Figure 10. This can be done with a conduction control apparatus 16 including a programmed microprocessor operative for respective cycles at a 218 Hz rate such as disclosed in U.S. Patent No. 4,282,466 of T. C. Matty, and such that one cycle of the conduction control apparatus 116 will commutate all of these thyristor switches and if desired the next cycle will provide gate pulses to fire only the selected thyristor switches that are to be conductive for the next desired operation of the motor circuit, such as shown in Figure 10.

In Figure 12, there is shown the brake current characteristic 160 that would take an undesired time delay period to go to zero without provided commutation of the brake thyristor. For the example of forward brake mode of operation, at time T10 the commutation circuit 110 is operated to commutate the thyristor switch 72 and the brake current goes to zero. This allows the conduction control apparatus 16 to gate ON the forward power mode thyristor switches 70 and 74, such that the desired motor current builds up as shown by curve 162 in the forward power direction.

18

CLAIMS:

1. Control apparatus for a motor which includes an armature and is connected to a voltage source for controlling and selecting a power mode of operation and a brake mode of operation of the motor, the apparatus comprising:

first thyristor switch means connected to allow current flow in a first direction through said armature,

second thyristor switch means connected to allow current flow in a second direction through said armature,

commutation control means coupled with each of the first and second thyristor switch means for selectively terminating the conductivity of said thyristor switch means, and

conduction control means coupled with each of the first and second thyristor switch means and coupled with said commutation control means for selecting one of a power mode or a brake mode of operation by initiating the conductivity of a predetermined one of the first and second thyristor switch means with said conduction control means in relation to the termination of the conductivity of the other of said thyristor switch means with said commutation control means.

2. Control apparatus as in claim 1, including: a brake resistor connectable for a brake mode of operation; brake control means having a first diode connected between a first end of the armature and said brake resistor, and a second diode connected between a second end of the armature and said brake resistor.

3. The motor control apparatus of claim 1,

with said commutation control means simultaneously terminating the conductivity of all conducting thyristor switch means.

4. The motor control apparatus of claim 1,

with the conduction control means selecting the power mode by establishing the conductivity of the first thyristor switch means in relation to terminating the conductivity of the second thyristor switch means and providing the brake mode by establishing the conductivity of the second thyristor switch means in relation to terminating the conductivity of the first thyristor switch means.

5. The motor control apparatus of claim 1,

with said conduction control means establishing the conductivity of said one thyristor switch means prior to the commutation control means terminating the conductivity of the other thyristor switch means.

6. The motor control apparatus of claim 5 for a motor including a field winding,

with said conduction control means providing a predetermined energization of the field winding in preparation for the brake mode of operation by establishing the conductivity of said one thyristor switch means prior to the conductivity termination of the other thyristor switch means.

7. The method of controlling a motor having an armature and connectable to a voltage source in either a power mode or a brake mode using first and second thyristors, the method including the steps of

determining the conductivity of first thyristor switch means to provide current flow through said armature in a first direction,

determining the conductivity of a second thyristor switch means to provide current flow through said armature in a second direction,

terminating the conductivity of said first and second thyristor switch means in relation to a desired changeover from one of said power and brake modes to the other of said power and brake modes, and

initiating the conductivity of the other of said first and second thyristor switch means at a predetermined time in relation to said conductivity termination for providing said desired changeover.

8. The method of controlling a motor as in claim 6,

with said predetermined time being ahead of said conductivity termination when the desired changeover is from the power mode to the brake mode and being substantially simultaneous with said conductivity termination when the desired changeover is from the brake mode to the power mode.

9. The method of claim 6 for controlling a motor having a field winding,

with said predetermined time being prior to said conductivity termination for providing a desired energization of said field winding when said changeover is from the power mode to the brake mode.

1/7

0093555

36 34 32

14 18 26

10

VOLTAGE
SOURCE

19

30

20

22

12

A

24

38

28

40

COMMUTATION
CIRCUIT

16

P SIGNAL
EFFORT
REQUEST

17

CONDUCTION
CONTROL
APPARATUS

PRIOR ART
FIG.1

10

VOLTAGE
SOURCE

50

58

56

A

F1

R1

52

60

R2

F2

62

54

PRIOR ART
FIG.2

FIG.3

FIG.4

3/7    0093555

FIG. 5

FIG. 6

| THYRISTOR DEVICES → | 70 | 72 | 74 | 76 |
|---|---|---|---|---|
| (FIG.2)FORWARD POWER | X | | X | |
| (FIG.3)REVERSE POWER | | X | | X |
| (FIG.4)FORWARD BRAKE | | X | | |
| (FIG.5)REVERSE BRAKE | X | | | |

FIG. 7

0093555

FIG.2A
PRIOR ART

FIG. 9

FIG. 8

FIG. 10

FIG. II

FIG. 12

European Patent Office

**EUROPEAN SEARCH REPORT**

Application number

EP 83 30 2295

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-A-1 538 667 (LICENTIA) <br><br> * Complete document * | 1,4,5, 7 | H 02 P 7/28 <br> H 02 P 3/08 <br> B 60 L 15/28 |
| Y | CH-A- 442 484 (LICENTIA) <br> * Column 3, line 60 - column 4, line 51 * | 1,2,7 | |
| Y | DE-A-2 603 873 (STE GENERALE DE CONSTRUCTIONS ELECTRIQUES ET MECANIQUES ALSTHOM) <br> * Page 4, last paragraph - page 8, last paragraph * | 1,2,7 | |
| Y | DE-A-2 818 800 (BROWN, BOVERI & CIE) <br> * Page 9, paragraph 2 - page 13, last paragraph; claim 1 * | 1,2,7 | TECHNICAL FIELDS SEARCHED (Int. Cl. 3) |
| A | GB-A-2 062 379 (WESTINGHOUSE ELECTRIC) <br> * Page 1, lines 34-90 * & US-A-4 284 930 (Cat. D) | | B 60 L 15/00 <br> H 02 P 3/00 <br> H 02 P 7/00 |
| A | EP-A-0 038 214 (TECHNICAL OPERATIONS) <br> * Page 7, last paragraph - page 13, last paragraph * | | |

The present search report has been drawn up for all claims

| Place of search | Date of completion of the search | Examiner |
|---|---|---|
| BERLIN | 29-07-1983 | GESSNER E A F |